# EUROPEAN PATENT APPLICATION

(11) **EP 1 278 377 A2**
(43) Date of publication of application: **22.01.2003**
(21) Application number: 01307851.4
(22) Date of filing: 14.09.2001
(51) Int. Cl.: H04N 5/64

(54) **Display apparatus**

(30) Priority: 27.06.2001 KR 2001037073
(71) Applicant: SAMSUNG ELECTRONICS CO., LTD., Suwon-City, Kyungki-do (KR)
(72) Inventor: Lee, Wan-sub, Changan-ku, Suwon city, Kyungki-do (KR)
(74) Representative: Geary, Stuart Lloyd

(57) **Abstract**

A cathode ray tube display apparatus comprises a panel 20a on which a picture is displayed, a funnel 10battached to the panel; an electron gun unit 30 and a video unit 40 .First and second clamp members are provided at the electron gun unit and the video unit respectively, and are held together by co-operating features (60c, 70c). With this configuration, the video unit is easily combined to the electron gun unit and prevented from separating from the electron gun unit.

## Description

The present invention relates to a display apparatus comprising a cathode ray tube having a neck portion, an electron gun unit located in the neck portion and a video unit mounted to said neck portion for providing control signals to the electron gun unit.

The term display apparatus collectively refers to monitors for TV sets or computer systems, and encompasses LCD (liquid crystal display) monitors, CRT (cathode ray tube) monitors, and CDT (colour display tube) monitors. Generally, CDT monitor and CRT monitor refer to monitors for computer systems and TV sets respectively, employing a cathode ray tube. For the purposes of this specification, the term CRT monitor will cover both CRT and CDT monitors.

A conventional CRT display apparatus is comprised of a cathode ray tube formed by combining a screen and a funnel. An electron gun unit is mounted in the neck of the cathode ray tube and emits an electron beam into the cathode ray tube. A video unit is connected to the electron gun unit and supplies a video signal to the cathode ray tube.

The electron gun unit emits an electron beam into the cathode ray tube in accordance with the intensity of the video signal. The electron beam collides with fluorescent materials of monochrome or RGB (red, green, blue) colours coated on an inner surface of the screen, thereby displaying a picture on the screen.

In a known display apparatus, the video and electron gun units are fastened together by a cable-tie. Such conventional means may not have sufficient strength to secure the larger, heavier units that would be required in a high quality display apparatus of increased size. In order to strengthen the fastening, the video unit may be directly attached to the neck of the cathode ray tube. However, the neck, which is made of glass, may break under the weight of the video unit.

The present invention addresses these shortcomings by providing a display apparatus in which a video unit is easily fastened to, and prevented from separating from, an electron gun unit.

A display apparatus according to the present invention comprises a cathode ray tube having a neck portion, an electron gun unit the neck portion and a video unit mounted to said neck portion for providing control signals to the electron gun unit, characterised in that the video unit is attached to the neck portion by first and second clamps.

The first clamp preferably comprises a ring-shaped first clamp main body, and a first tightening member connecting opposite ends of the first clamp main body so as to fasten the first clamp main body on the neck of the funnel.

A preferred second clamp comprises a ring-shaped second clamp main body, which may be mounted on a plurality of ribs located in the video unit, and a second tightening member connecting opposite ends of the second clamp main body so as to fasten the second clamp main body on the first clamp main body.

Preferably, at least one hole is provided on one of the first and second clamp main bodies, and a pin is provided on the other, so that the pin may lock into the hole, preventing separation of the video and electron gun units. The hole may be of an elongated shape.

A hook may be provided at an end of each rib, for co-operation with a hook hole located on the second clamp main body , to mount the second clamp main body on the ribs.

The video unit may further include a shield member having an aperture through which the electron gun unit is inserted, a reinforcement member which is attached to the shield member and comprises the plurality of ribs extending towards the electron gun unit, and a video PCB fastened to the rear of the shield member with a boss holder for receiving the boss of the electron gun unit.

An embodiment of the present invention will now be described, by way of example, with reference to the accompanying drawings in which
Figure 1 is an exploded perspective view of a display apparatus according to the present invention;
Figure 2 is an enlarged perspective view of a part of the display apparatus of Figure 1;
Figure 3 is an enlarged perspective view of an electron gun unit of Figure 2;
Figure 4 is an enlarged perspective view of a video unit of Figure 2;
Figure 5 is an exploded perspective view of the electron gun unit and the video unit; and
Figure 6 is an enlarged perspective view of first and second clamp members of Figure 5.

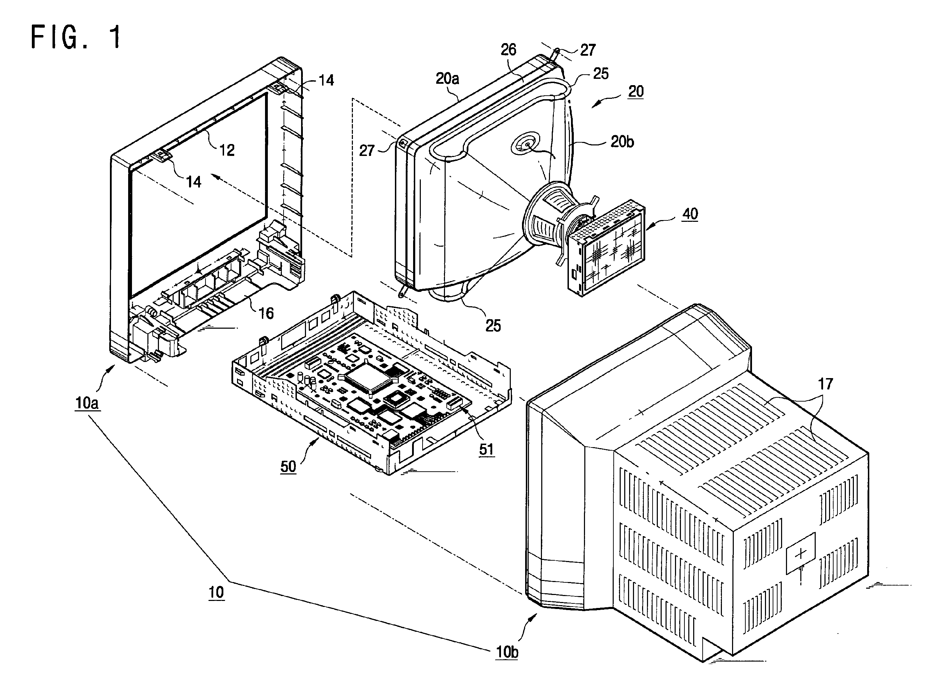

As shown in Figure 1, a display apparatus according to the present invention comprises a housing 10, a cathode ray tube 20, an electron gun unit 30 which emits an electron beam through the cathode ray tube 20 and a video unit 40, connected to the electron gun unit 30, for supplying a video signal to the cathode ray tube 20. A printed circuit board (PCB) 51 for supplying an electrical signal to the cathode ray tube 20 is mounted on a substrate frame 50.

The housing 10 surrounding the cathode ray tube 20 includes a front casing 10a and a rear casing 10b which are fastened together by a snap-fitting arrangement comprising a plurality of projections 14, located in an upper part of the front casing 10a and a plurality of snap-holders on an upper part of the front of the rear casing 10b. An opening 12 is provided in the front casing 10a for viewing a picture displayed on a screen 20a of the cathode ray tube 20. A support member 16 on a lower part of the front casing 10a supports a lower part of the cathode ray tube 20. The rear casing 10b further includes a plurality of slots 17 for dissipating heat generated by the display apparatus components.

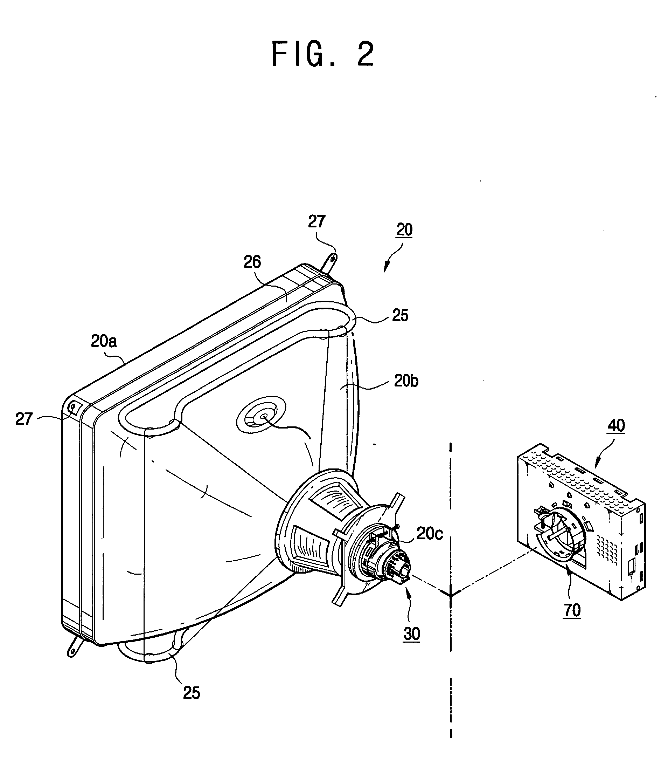

As shown in Figure 2, the cathode ray tube 20 comprises the screen 20a and an attached funnel 20b. A degaussing coil 25, mounted on the outside of the cathode ray tube 20, provides shielding against magnetic fields generated by the internal components. A band of metal 26 extends around the circumference of the front part of the cathode ray tube 20. An attachment member 27 is provided at each corner of the band 26. Each attachment member comprises a screw hole for receiving a boss (not shown) protruding from the rear of the front casing 10a.

The electron gun unit 30 is mounted on the neck 20c of the cathode ray tube 20. The electron gun unit 30 emits an electron beam which collides with monochrome or red, green and blue (RGB) fluorescent materials of monochrome or RGB (red, green, blue) colours coated on an inner surface of the screen 20a, thereby displaying a picture.

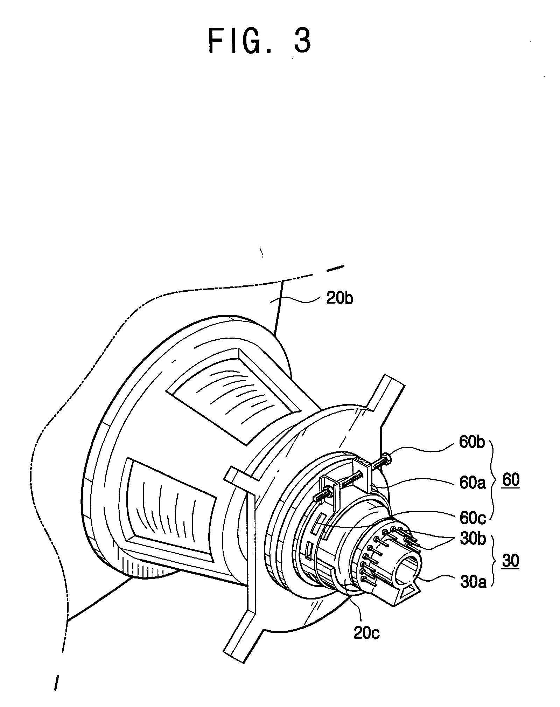

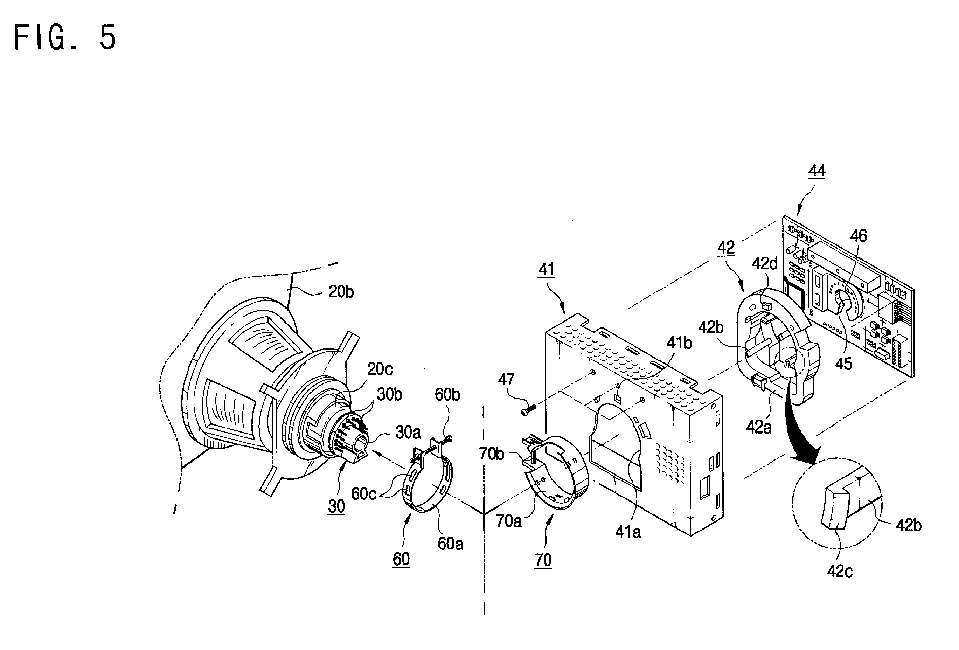

As shown in Figure 3, the electron gun unit 30 includes an insertion part (not shown) placed within the neck 20c of the cathode ray tube 20, and a boss 30a provided at the rear of the insertion part, protruding from the neck 20c. The boss 30a has a non-circular cross-section to prevent rotation of the video unit 40 when the boss 30a is placed in a boss holder 45 (see Figure 5). A plurality of pins 30b are located around the boss 30a for insertion into pinholes 46 (see Figure 5) provided on the boss holder 45, providing electrical connections therebetween.

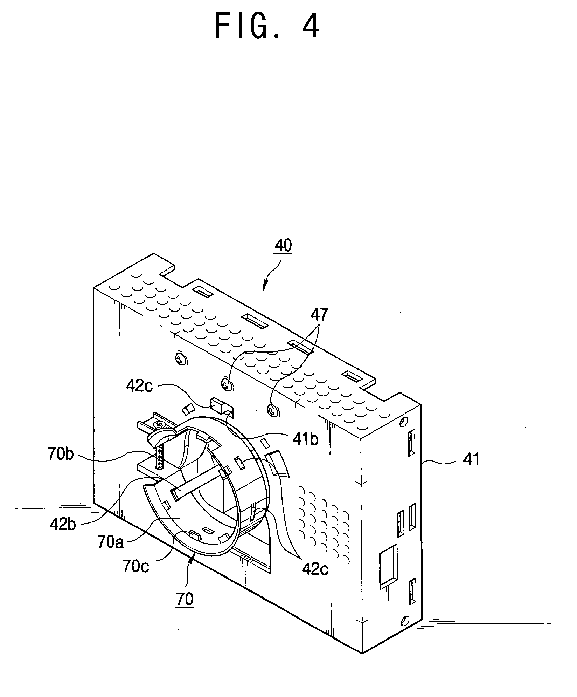

Referring to Figures. 4 and 5, the video unit 40 comprises a shield member 41 made of metal, which forms part of the outer surface of the video unit 40, a reinforcement member 42 attached to the rear of the shield member 41 and a video PCB 44 fastened to the rear of the shield member 41 by bolts 47. An aperture 41a is provided in a central area at the front of the shield member 41, through which the neck 20c and the boss 30a of the electron gun unit 30 are inserted. A plurality of hook holes 41b situated around the aperture 41a receive the hooks 42d on the reinforcement member.

The reinforcement member 42 has a main body 42a with an opening at its centre. A plurality of ribs 42b are provided on the main body 42a and extend through the aperture 41a when the reinforcement member 42 is attached to the shield member 41. The ribs 42b are placed around the aperture 41a and support a second clamp member 70 (to be described later). A hook 42c is provided at an end of each rib 42b. The hooks 42c selectively lock into a notch 70d and hook holes 70e on the second clamp member 70. Thus, the second clamp member 70 is held by the ribs 42b.

The boss holder 45 is mounted on the video PCB 44 and is shaped to correspond with, and receive, boss 30a. Pin holes 46 on the boss holder 45 receive pins 30b provided on the electron gun unit 30 for electric connection therebetween.

Clamp members 60 and 70 are attached to the electron gun unit 30 and the video unit 40 and fastened to each other to prevent separation of the two units 30, 40. Hereinbelow, the clamp member provided on the electron gun unit 30 will be referred to as the first clamp member 60, and the clamp member provided at the video unit 40 will be called the second clamp member 70.

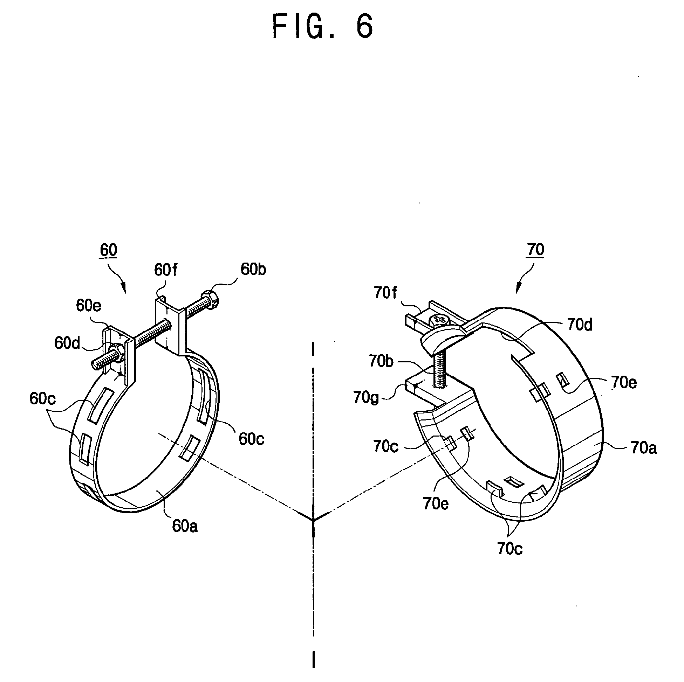

As shown in Figure 6, the first clamp member 60 is comprised of a ring-shaped first clamp main body 60a and first tightening members 60b and 60d connecting opposite ends 60e and 60f of the first clamp main body 60a so as to fasten the first clamp main body 60a around the neck 20c of the cathode ray tube 20. On the first clamp main body 60a are a plurality of holes 60c to which pins 70c of the second clamp main body 70a are locked. Each hole 60c has an elongated shape, so that each pin 70c can be easily locked into the hole 60c.

The second clamp member 70 is comprised of a second clamp main body 70a for mounting on the plurality of ribs 42b of the video unit 40 and a second tightening member 70b connecting opposite ends 70f and 70g of the second clamp main body 70a, thereby keeping the pins 70c located on the second clamp main body 70a from coming out of the holes 60c of the first clamp member 60 when the clamp members are locked together. The second clamp main body 70a also includes the notch 20d and hook holes 70e in which the hooks 42c provided at the end parts of the ribs 42b are locked.

A procedure for attaching the video unit 40 to the electron gun unit 30 will now be described.

The first clamp main body 60a of the first clamp members 60 is placed around the neck 20c. The opposite ends 60e and 60f of the first clamp main body 60a are then connected to each other by means of the tightening members 60b and 60d, thereby fastening the first clamp main body 60a on the neck 20c.

The second clamp main body 70a of the second clamp member 70 is mounted on the ribs 42b of the video unit 40. That is, the hooks 42c provided at the ends of the ribs 42b are hooked onto the notch 70d and the hook holes 70e.

The boss 30a of the electron gun unit 30 is inserted into the boss holder 45 of the video PCB 44 through the aperture 41a of the video unit 40, plugging the pins 30b of the electron gun unit 30 into the pin holes 46 provided on the video PCB 44. Then, the pins 70c on the second clamp main body 70a are hooked onto the holes 60c of the first clamp main body 60a. The second tightening member 70b is then tightened so as to urge the opposite ends 70f and 70g of the second clamp main body 70a together, thereby keeping the pins 70c from coming out of the holes 60c. Thus, the fastening of the electron gun unit 30 to the video unit 40 is completed.

In the embodiment described above, according to the present invention, first and second clamp members 60 and 70 are mounted on the electron gun unit 30 and the video unit 40 respectively, thereby providing means for attaching the video unit 40 and the electron gun unit 30 and preventing their separation. Moreover, this arrangement should not cause breakage of the neck 20c of the cathode ray tube 20.

## Claims

1. A display apparatus comprising a cathode ray tube (20) having a neck portion (20c), an electron gun unit (30) located in the neck portion and a video unit (40) mounted on said neck portion for providing control signals to the electron gun unit, **characterised in that** the video unit is attached to said neck portion by first and second clamps (60, 70).

2. A display apparatus according to claim 1, wherein the first clamp (60) is clamped to said neck portion (20c) and the second clamp (70) is mounted to the video unit (40) and clamped onto the first clamp.

3. A display apparatus according to claim 2, wherein the first and second clamps (60, 70) include complementary engagement means (60c, 70c).

4. A display apparatus according to claim 3, wherein the engagement means comprise projections (70c) on one of said clamps (70) and projection receiving means (60c) on the other clamp (60).

5. A display apparatus according to claim 4, wherein the projections (70c) are provided on the second clamp (70) and the projection receiving means (60c) comprise apertures in the first clamp (60).

6. A display apparatus according to any one of claims 2 to 5, wherein the clamps (60, 70) are substantially annular and include respective constricting means (60b, 60d, 70b) for constricting the clamps to effect clamping.

7. A display apparatus comprising:
a panel on which a picture is displayed;
a funnel being combined to the panel;
an electron gun unit being inserted into a neck of the funnel and having a boss part exposed outside of the neck;
a video unit combined to the electron gun unit and transmitting a video signal; and
first and second clamp members respectively provided at the electron gun unit and the video unit, and preventing the video unit from separating from the electron gun unit.

8. The display apparatus according to claim 7, wherein the video unit includes a shield member having a neck hole through which the electron gun unit is inserted, a reinforcement member having a plurality of ribs toward the electron gun unit and being combined to the shield member, and a video PCB being fastened to the rear of the shield member and having a boss holder through which the boss part of the electron gun unit is fitted.

9. The display apparatus according to claim 8, wherein the first clamp member is comprised of a ring-shaped first clamp main body provided on the neck of the funnel, and a first tightening members making opposite ends of the first clamp main body close to each other so as to fasten the first clamp main body on the neck, and
the second clamp member is comprised of a ring-shaped second clamp main body being held by a plurality of ribs of the video unit, and a second tightening member making opposite ends of the second clamp main body close to each other so as to fasten the second clamp main body on the first clamp main body when the second clamp main body is combined to the first clamp main body.

10. The display apparatus according to claim 9, wherein on one of the first and second clamp main bodies is provided at least one hole, and on the other thereof is provided a pin to be locked to the hole.

11. The display apparatus according to claim 10, wherein the hole is of an elongated shape.

12. The display apparatus according to claim 9, wherein at an end part of every rib is provided a hook, and on the second clamp main body is provided a hook hole to which the hook is selectively locked.
